# EUROPEAN PATENT APPLICATION

(11) **EP 2 298 598 A1**
(43) Date of publication of application: **23.03.2011**
(21) Application number: 10175281.4
(22) Date of filing: 03.09.2010
(51) Int. Cl.: B60P 3/03, B60R 25/10

(54) **Burglarproof system for enclosed compartments**

(30) Priority: 17.09.2009 IT AL20090005
(71) Applicant: B.V. di Bersani e Valle S.N.C., 12081 Beinette (CN) (IT)
(72) Inventor: Valle, Andrea, I-12012, Boves (CN) (IT)
(74) Representative: Karaghiosoff, Giorgio Alessandro

(57) **Abstract**

Burglarproof system for enclosed compartments delimited on all sides by delimiting walls, in at least one or more of the walls of said enclosed compartment (2) there being provided burglarproof means composed of at least one sensor (21) and there being provided means (22) for processing signals from said at least one sensor (21) which generate a trigger signal on the basis of characteristic parameters of the signal generated from said at least one sensor (21), and means for producing and supplying inside the enclosed compartment (2) a fast-hardening foam or the like which are driven by said processing means (22) on the basis of the signals from the sensors (21) by means of said trigger signal.

## Description

The present invention relates to a burglarproof system for enclosed compartments, delimited on all sides by delimiting walls, in at least one or more walls of said enclosed compartment there being provided burglarproof means composed of at least one sensor and there being further provided means for processing signals coming from said at least one sensor and means for generating and supplying inside the enclosed compartment a fast hardening foam or the like which are controlled by said processing means on the basis of signals coming from sensors.

Valuables contained within security vans are currently protected by means of safety systems mainly of the passive type, for example making vehicles more impenetrable, by using materials more and more resistant against structural cutting and modification actions; as regards strength very effective results have been achieved, due also to the help of military vechicle researches, however passive protection not only does not provide any type of protection on valuables within the armoured compartment, but it also does not provide safety measures for the safety of users of the security van, often forcing them to leave the van in order to return attacks and in order to preserve transported goods, thus risking their life.

On the contrary there are also active safety systems which protect valuables inside the van by blocking them by using very strong foams or resins which are filled into the armored van, which react in contact with the air and make solid compounds that completely fill the compartment and make it impossible to take out valuables, at least in a satisfactory and short time for the robbers.

However such systems have several automation drawbacks, when they are not operated by an external input, operation defects are found due to the low reliability of devices intended to detect modification attempts against walls constituting the armored compartment. Moreover possible sensors do not guarantee the system to be operated in case of any type of method used for making apertures in the walls of the armored compartment, thus the safety system is not guaranteed to be really operated, while there can be conditions when such operation does not occur.

What described above is typical also of any situation providing valuables to be stored within an enclosed compartment, both an armored one such as the case of bank vaults, safes and the like, and not armored one, simply an enclosed compartment, such as the case of containers used for transporting various goods.

Therefore there is the unsatisfied need for a system allowing stored valuables to be protected from thefts, while keeping operators safe, if any, and not requiring any intervention by external agents and particularly the need for safety systems protecting a general enclosed compartment from being opened absolutely guaranteeing them to be operated in case of any manners used for making apertures in the walls of said enclosed compartment.

The invention aims at meeting such need by providing a burglarproof system for enclosed compartments, having on at least one of the walls at least of the enclosed compartment or on a part of said walls one or more sensors and means for processing signals coming from such sensors, which are intended to detect changes in some physical parameters related to the inside of the compartment and/or to the walls thereof, which physical parameters reveal that one or more of the walls at least of the compartment and/or a part thereof have been modified, opened, cut or broken.

Therefore the above mentioned sensors are intended to measure changes in some physical parameters related to the inside and/or to the walls of the compartment, they send signals to processing means which serve for verifying whether a change has actually happened which can be related to an action modifying, opening, cutting or breaking one or more walls of the armored compartment denoting a break-in attempt. Such processing means, in a possible embodiment, can provide a check for signals sent from sensors, which verifies data related to a change in one of the physical parameters, such to verify whether or not the change is really due to a break-in attempt against the enclosed compartment.

For example a possible check can be the comparison of the amount of the change with respect to a time unit, the gradient measure, that is the ratio of the change in the physical parameter to the time interval allows signals sent from sensors to be analysed defining them as possible alarms due to break-in attempts.

Consequently said processing means analyse signals coming from sensors and are connected to means producing and supplying fast hardening foams or the like and if processing means detect a possible action modifying, opening, cutting or breaking one or more walls of the enclosed compartment they send a command to said generating and supplying means which are intended to fill the inside of the enclosed compartment with such an amount of foam that valuables stored within said compartment cannot be taken out.

To this end fast hardening foams and/or resins are usually used which after being suitably mixed and heated allow a product to be obtained having a low density but being very strong and resistant against impacts and perforations.

A further improvement of the burglarproof system for enclosed compartments, object of the present invention, provides said means generating and supplying foams or the like into the enclosed compartment to be both automatically operated by means processing signals from sensors, as already described, and to be operated by an input coming from the outside; this characteristic allows, for example in the case the system is mounted on a security van, users to operate the system without the need of leaving the front portion of the vehicle increasing the safety level.

As an alternative it is possible to operate the whole burglarproof system by any external input such as a remote control or a satellite-controlled antitheft device.

An improvement of the burglarproof system for enclosed compartments, object of the present invention, provides sensors measuring physical parameters to be placed inside or outside at least the enclosed compartment or within the thickness of one or more walls delimiting at least the enclosed compartment.

Independently of their location, sensors have at least an elongated element with a lentghwise extension along a wall of the enclosed compartment, such that the sensor follows such a path that any action modifying, opening, cutting or breaking one or more walls of the compartment leads to an interference with the sensor.

For example a possible configuration of the path along at least a direction of at least a wall of the armored compartment provides at least one turn, preferably two opposite turns which can have a serpentine or "zig-zag" shape; in particular the path has the shape of one or more "z" connected one after the other. Thus any action modifying, opening, cutting or breaking one or more walls of at least the enclosed compartment and/or a part thereof, requiring a passage aperture to be made which is sufficient for entering into said compartment, produces an interference with said sensor, generating a trigger signal.

Such intereference is recorded by the sensor as a change in one of the physical parameters recorded therefrom and consequently it is translated into a trigger signal by the processing means, thus any break-in attempt is useless since valuables kept inside the enclosed compartment are protected by the processing means which operate the foam generating and supplying means.

In the particular case the burglarproof system according to the present invention is mounted on a security van, it is possible to provide sensors with such an arrangement that sensors are mounted not only inside the armored compartment, but also at the front portion intended to house the driver and at least a further passenger, such to prevent also the front portion of the vehicle from being broken in, assisting the external operating input already described above.

The several possible configurations for the burglarproof system according to the present invention provide several types of sensors to be used which detect several physical parameters which can be mounted individually or in combination inside the enclosed compartment.

For example the use of an electric cable can be provided along a part or all of one or more walls of the enclosed compartment the means processing signals coming from said electric cable being connected at the ends thereof.

The electric cable in combination with processing means and with electric signal generating means constitute an electric system whose parameters such as current, voltage and/or other electric parameters are modified when the electric cable constituting the sensor is cut and therefore the circuit is broken.

According to a preferred variant embodiment, instead of simply measuring the current flow within the cable (resistance and/or current and/or voltage), there are provided means for generating an electric signal with a specific frequency the electric cable constituting the sensor being a part of the generating oscillatory circuit and a change in the electric cable resistance causing a change in the operating parameters of the oscillatory circuit generating the electric signal, thus the frequency of the generated electric signal is modified while processing means comprise a control unit intended to measure the change in the frequency of the generated signal the nominal frequency value of the signal being stored in a memory and said value being compared by a comparator with the frequency value actually measured by the control unit, which, in case of differences between said values generates a signal triggering the operation of the burglarproof system, that is of means generating and supplying the foam.

By means of a suitable arrangement of the cable path, any attempt to modify, open, cut or break one or more walls delimiting the enclosed compartment, definitely causes the cable to be interrupted and therefore causes a change in the signal frequency which is detected as described above and therefore it causes the burglarproof system to be operated.

By using the same configuration it is possible to provide control units comparing alternatively and/or in combination changes in the current intensity of the generated signal and/or the resistance value of the cable.

A further possible type of sensors of the burglarproof system according to the present invention, can be composed of one or more ducts whose inlet and outlet ends are connected to means supplying a pressurized fluid. The fluid can be an hydraulic or penumatic fluid. Supplying means can be composed of a pump generating a specific pressure value for a fluid or a gas inside the duct tubes, directly or by means of a plenum chamber, while processing means comprise a gauge measuring changes in the pressure inside the circuit and in case of changes it generates a trigger signal operating the burglarproof system according to the present invention.

As an alternative or in combination with electric sensors and with penumatic or hydraulic ones it is possible to provide optical sensors, in the form of optical fibre cables, the structure of means generating signals and/or processing them being made in a way corresponding to that of said sensors already described by using obviously generating and processing means in compliance with the optical signal transmitted from the optical fibre cable.

In particular it is possible to provide the use of a sensor in the form of an optical fibre cable provided in combination with optical signal generators and with processing means composed of control units verifying possible changes in the optical signal inside the system composed of at least said one sensor and said processing means.

As an alternative it is possible to provide other types of sensors to be used individually or in combination with those already described, intended to detect other physical parameters different from changes in current or pressure. For example it is possible to use sensors detecting the wall temperature or light-sensitive sensors detecting the amount of light inside the enclosed compartment: in this cases there are provided control units for signals coming from sensors, memories for storing nominal values and comparing means for comparing nominal values with the measured ones and which in case of differences among analysed data, generate a trigger signal.

When several different sensors are provided, processing means receive signals generated from comparing means comparing the signals from different sensors with relevant nominal values, the burglarproof system being operated on the basis of specific combinations of the provision of the different trigger signals generated by individual comparators associated to the different sensors. This allows false alarm conditions to be avoided and/or it allows dangerous conditions to be always detected.

Independently from the type of sensors used, said processing means analyse the signals coming from sensors and the control outputs of said processing means are connected to means generating and supplying fast hardening foams or the like. Therefore if processing means detect a possible action modifying, opening, cutting or breaking one or more walls provided with one or more of said sensors, said processing means send a trigger signal to said generating and supplying means which are intended to fill the inside of the enclosed compartment with such an amount of foam that valuables stored inside said compartment cannot be taken out.

Processing means send the trigger signal to means generating and supplying foams or the like which are composed of a system comprising foam tanks and nozzles and of means for supplying said foam; generally said supplying means cause the pressure to increase inside foam tanks leading the foam to be discharged from the nozzles.

For example an inert gas bottle connected to tanks forcing the foam through nozzles, or more simply any pump that can cause pressure to increase inside tanks can be provided.

These and other characteristics and advantages of the present invention will be more clear from the following description of some embodiments shown in annexed drawings wherein:
Fig.1 schematically is the burglarproof system for enclosed compartments, according to the present invention mounted on a security van and upon which one of the possible type of sensors constituting said burglarproof system is provided;
Fig.2 is a flowchart schematically summarizing the operation of the burglarproof system according to the present invention;
Fig.3 is a possible arrangement of the sensor inside the armored compartment of the security van;
Fig.4 schematically is a principle arrangement of means generating and supplying foams or the like of the burglarproof system according to the present invention.

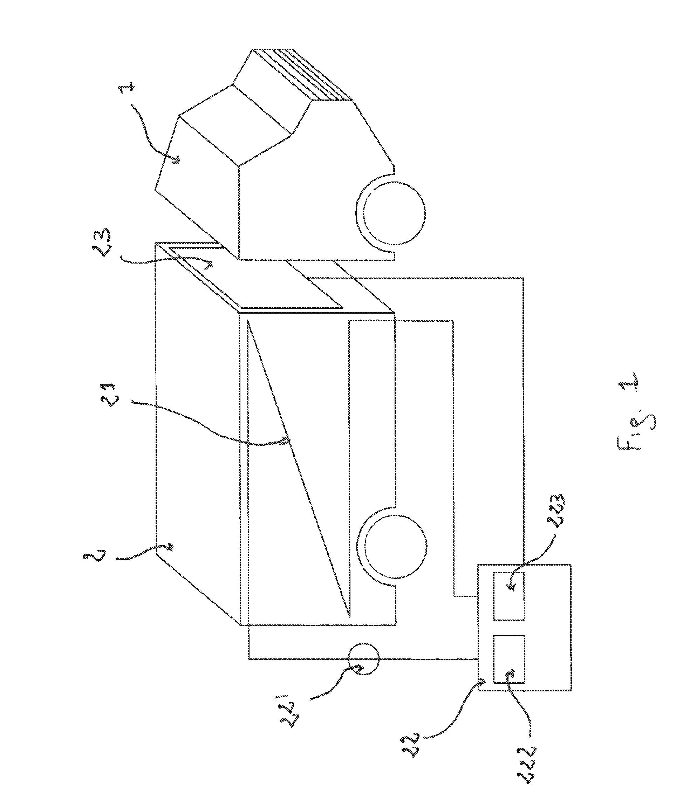

Figure 1 schematically shows a burglarproof system for enclosed compartments, object of the present invention, according to one preferred embodiment thereof, mounted on a security van, comprising a front portion 1 intended to house the driver and at least a further passenger and a rear portion, within which there is provided at least an armored compartment 2, delimited on all sides by delimiting walls burglarproof means composed of at least one sensor 21 being mounted thereon.

For the sake of exposition and description simplicity figure 1 shows only one sensor 21 fitted only on one of the walls delimiting the armored compartment 2, but more than one sensor 21 fitted on one or more walls can be provided. Conventionally in an armored vehicle at least the outwardly faced perimetral walls delimiting the armoured compartment and in case also the roof are protected against break-in attempts, therefore generally each one of such walls is provided with at least one sensor; moreover it is possible to provide more than one sensor for each wall if the latter is particuraly wide.

Still with reference to figure 1, the sensor 21 is connected at the two ends thereof to processing means 22 for signals from the sensor 21; the sensor 21 is composed of an electric cable, to which an electric signal is transmitted by a signal generator 221, and which electric signal is read by processing means 22, which have control units for verifying changes in physical parameters of the signal transmitted to the electric cable 21 inside the electrical system composed of said sensor 21 and of said processing means 22.

There are several methods for verifying monitored parameters of the electric signal: such parameters can be monitored individually or in combination one to the other, for example a parameter can be the current intensity within the cable, or, in the case of oscillating signal, changes in the signal frequency are detected.

Inside said control unit, signals from the electric cable sensor 21 are loaded into a memory 222 in order to be subsequently compared with nominal signal values by a comparator 223, which, in case of differences between the analysed data, produces a trigger signal.

A variant embodiment provides not to store nominal threshold values, but to use dynamic thresholds; when the system is activated processing means 22 automatically define values of physical parameters of interest of the signal within the sensor 21 and verify time changes of said parameters, there being provided a timer cyclically causing the measurement, the storage and the comparison between the last recorded value of the parameter and the previously recorded value.

Such possible variant embodiment, is particularly useful if, as described above, changes in recorded physical parameters are subjected to a check: the check can be the comparison between the amount of the change with respect to a time unit, the gradient measurement, that is the ratio of the change in the physical parameter to the time interval allows signals transmitted from sensors to be analysed defining them as possible alarms due to break-in attempts.

Therefore the trigger signal is generated as a consequence of any break-in attempt inside the armored compartment 2: the electric cable sensor 21 converts such structural change attempts, namely the modification, opening, cut, or breaking of one or more walls of the armored compartment causing the cable to be modified at one or more locations, into changes of one or more of said electric parameters which in turn are detected by the comparator and converted into trigger signals.

Then the trigger signal is sent to means 23 generating and supplying inside the armored compartment a fast hardening foam or the like which are controlled by processing means 22 on the basis of signals coming from sensors 21.

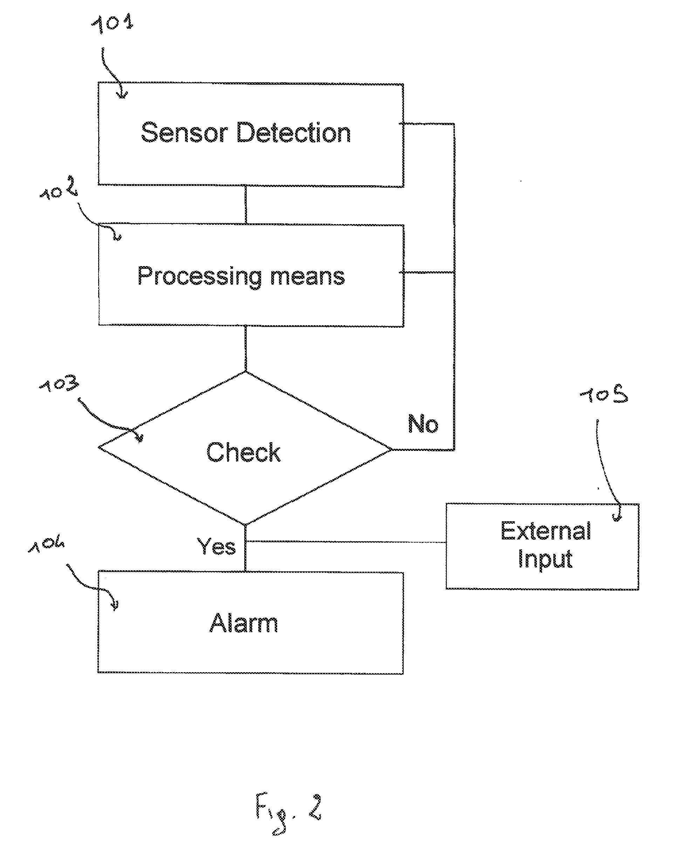

Figure 2 schematically shows the flowchart schematically summarizing the principle operation of the burglarproof system according to the present invention, with a particular reference to the configuration already described in figure 1, where said system is mounted on a security van, providing the following steps, shown with functional blocks;

detecting a physical parameter relating to walls or to the inside of the armored compartment by at least one sensor, denoted by 101, such as described above; depending on the type of sensor different parameters are measured, current intensity and frequency, pressure, temperature, etc... and signals are transmitted to processing means;

receiving signals transmitted from sensors by processing means, denoted by 102; processing means are connected to sensors, data received are loaded into the memory in order to be subsequently compared by a comparator acting for detecting a possible change in the analysed data, a change related to a break-in attempt inside the armored compartment. Such as described above it is possible to provide different types of sensors to be used in combination, therefore according to a variant embodiment it is possible to provide in this step an algorithm processing signals coming from the different sensors and weighting the importance thereof by using a predetermined evaluation table reflecting exemple cases; for example a change in the light inside the compartment denotes that an opening has occurred and the trigger signal is transmitted even if in the electric cable sensor no changes in physical parameters of interest are detectable;

it is possible to provide a check step, denoted by 103, a check of signals transmitted by sensors acting for verifying data denoting a change in one of the physical parameters, such to check whether or not the change is really due to a break-in attempt into the armored compartment: for example a possible check can be the comparison of the amount of the change with respect to a time unit, the gradient measurement, that is the ratio of the change in the physical parameter to the time interval allows signals sent from sensors to be analysed defining them as possible alarms due to break-in attempts: in figure 2 the flowchart refers to the embodiment described above, where the threshold value of the physical parameters to be analysed is a dynamic threshold value cyclically acquired and automatically defined and it is not a pre-set nominal threshold value:
trigger signal, denoted by 104, a break-in attempt into the armored compartment is recognized and consequently a trigger signal is sent to means generating and
supplying foams or the like which are provided into the armored compartment by introducing fast hardening foams, which by being suitably mixed and heated, allow a product to be achieved having a low density, but
being very strong and resistant against impacts and
perforations, such that valuables stored within the van cannot be taken out;
an activation by an external input, denoted by 105, is also provided which does not need a structural modification to occur to one or more of the walls of the van, but it allows operators to activate the system without the need of leaving the front portion of the vehicle, in case of dangerous situations, increasing the safety level and keeping the operators safe.

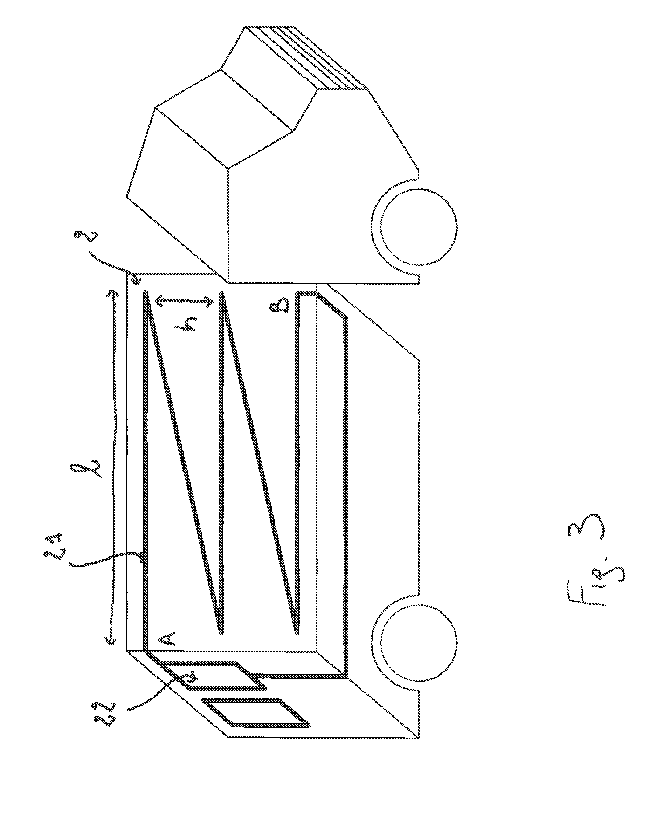

Figure 3 shows one of the possible arrangements of the sensor of the burglarproof system according to the present invention, in particular according to a preferred embodiment where said system is mounted on a security van.

Generally sensors have at least one elongated element with a lenghtwise extension along a wall of the armored compartment, such that the sensor follows such a path that any action modifying, opening, cutting or breaking one or more walls of the armored compartment causes an interference with the sensor.

With reference to figure 3 the sensors 21 mounted along a wall constituting the armored compartment 2, has four turns which are opposite two by two such to form a serpentine-like pattern: in particular the path is composed of three arms parallel to the longitudinal axis of the vehicle and two inclined arms such to form a path with the shape of two "Z" connected one after the other, whose ends A and B are connected to the processing means 22.

As it can be clearly seen in figure 3, any action modifying, opening, cutting or breaking one or more walls at least of the armored compartment 2 of the van and/or a part thereof, requiring the generation of a passage opening sufficient for entering into said compartment 2, leads to an interference with said sensor 21: such interference causes one of the parameters measured by the sensor 21 to be subjected to a change which is analysed and detected by processing means 22 generating a trigger signal according to the method already described in figures 1 and 2.

Still with reference to figure 3 and to the path of the sensor 21, measurements "h" and "1" are calculated such that it is not possible to make an opening, a circular or rectangular one respectively, having a radius or the sides of such an amount to allow a human being to pass through and/or valuables inside the armored compartment to be taken out without causing an interference with the sensor 21.

According to further variant embodiments, the path of the sensor 21 can have a serpentine pattern like a sinusoid, by using several widths depending on dimensions of the armored compartment, or the path can be like a grid, providing the individual constituent element to have such a size that a human being cannot pass through and/or valuables inside the armored compartment cannot be taken out without interfering with the grid.

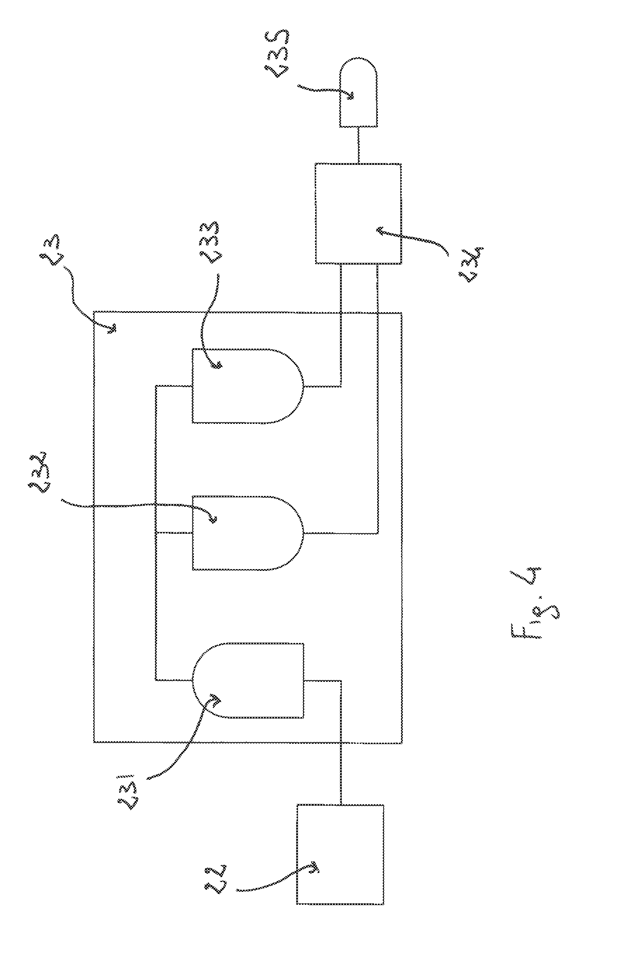

Figure 4 schematically shows a possible configuration of means generating and supplying 23 foams or the like, of the burglarproof system according to the present invention.

Once processing means 22 for the signal coming from the sensor described above detect a change in one of the physical parameters analysed by said processing means 22, they generate a trigger signal which is transmitted to an inert gas pressurized bottle, typically nitrogen 231. Such trigger signal increases pressure allowing the inert gas to flow outside the bottle 231 and to enter, through valves and ducts, into the two tanks 232 and 233 containing two substances, typically polyol and diisocyanate, that once mixed together cause a fast hardening foam to be produced. By the pressure exerted by the inert gas the two substances are discharged from the tanks 232, 233, are mixed together inside the mixing chamber 234 generating a mixture which is filled into the enclosed compartment through nozzles 235, producing a product having a low density, but being very strong and resistant against impacts and perforations, such that valuables kept inside the enclosed compartment cannot be taken out.

From the above it is clear that the invention is not limited to the embodiment herein described and shown merely by way of non limitative example, but it may be greatly varied and modified, as a whole and in individual details, depending on specific requirements and conveniences related to manufacture and use, especially as regards construction and within the scope of technical and functional equivalents without departing from the principle described above and claimed below.

## Claims

1. Burglarproof system for enclosed compartments, delimited on all sides by delimiting walls,
in at least one or more of the walls of said enclosed compartment (2) there being provided burglarproof means composed of at least one sensor (21)
means (22) for processing signals from said at least one sensor (21) which generate a trigger signal on the basis of characteristic parameters of the signal generated from said at least one sensor (21),
means for producing and supplying (23) inside the enclosed compartment (2) a fast-hardening foam or the like which are driven by said processing means (22) on the basis of the signals from the sensors (21) by means of said trigger signal
**characterized in that**
said at least one sensor (21) is a sensor of physical parameters denoting that one or more walls at least of said enclosed compartment (2) and/or of a portion thereof is modified, opened, cut or broken.

2. Burglarproof system for enclosed compartments, according to claim 1, **characterized in that** said at least one sensor (21) can be provided both within the thickness of said wall, and within and outside said enclosed compartment (2).

3. Burglarproof system for enclosed compartments, according to claims 1 and 2, **characterized in that** said sensor (21) has at least a lengthwise extension along a portion of at least a wall and which sensor follows a path along said wall which is crossed according to at least a direction, such that any break-in action against one or more walls at least of said enclosed compartment (2), inevitably interferes with said sensor (21).

4. Burglarproof system for enclosed compartments, according to one or more of the preceding claims, **characterized in that** said at least one sensor (21) extends for a path along a plane, basically parallel to the corresponding wall provided with said at least one sensor (21), and the distance between the different arms, one with respect to the other one, of the elongated sensor, along said path is always smaller than a predetermined maximum distance, such that it is not possible to make openings having a radius or dimensions greater than those allowing a person to pass and/or protected valuables to be taken.

5. Burglarproof system for enclosed compartments, according to one or more of the preceding claims, **characterized in that** said at least one sensor (21) extends for a path along a plane, basically parallel to the corresponding wall provided with said at least one sensor (21), and said path has at least a turn, preferably two opposite turns that can have a "zigzag" or serpentine shape.

6. Burglarproof system for enclosed compartments, according to one or more of the preceding claims, **characterized in that** said means for generating and supplying (23) inside the enclosed compartment a fast hardening foam or the like are driven both automatically by a command received from said means (22) processing the signals from said at least one sensor (21), and manually by means of an outer input.

7. Burglarproof system for enclosed compartments, according to one or more of the preceding claims, **characterized in that** said processing means (22) have control means intended for verifying that the change of one of the physical parameters measured by said sensor (21) is really due to an action modifying, opening, cutting or breaking one or more walls of said enclosed compartment (2), said control means being composed of sensors for further different physical parameters.

8. Burglarproof system for enclosed compartments, according to one or more of the preceding claims, **characterized in that** said at least one sensor (21) is composed of an electrical cable provided in combination with a signal generator (221) and said processing means (22) are composed of control units for verifying possible changes in the physical parameters, particularly current intensity and frequency, in the electrical system composed of said at least one sensor (21) and said processing means (22).

9. Burglarproof system for enclosed compartments, according to one or more of the preceding claims, **characterized in that** said at least one sensor (21) is composed of one or more ducts with a pressurized fluid flowing therein provided in combination with means for supplying the pressurized fluid and being provided in communication one with the other and connected to said processing means (22) composed of at least a pressure gauge intended for measuring the changes in pressure into the circuit composed of said at least one sensor (21) and said processing means (22).

10. Burglarproof system for enclosed compartments, according to one or more of the preceding claims, **characterized in that** said at least one sensor (21) is composed of a fiber optic cable provided in combination with optical signal generators and said processing means (22) are composed of control units for verifying possible changes of said optical signal into the system composed of said at least one sensor (21) and said processing means (22).

11. Burglarproof system for enclosed compartments, according to one or more of the preceding claims, **characterized in that** said at least one sensor (21) detects the temperature regarding at least a portion of at least one of the walls of said enclosed compartment (2).

12. Burglarproof system for enclosed compartments, according to one or more of the preceding claims, **characterized in that** said at least one sensor (21) is composed of light-sensitive sensors, detecting the light into said enclosed compartment (2).

13. Burglarproof system for enclosed compartments, according to one or more of the preceding claims, **characterized in that** said means for generating and supplying (23) foams or the like comprise at least two tanks (232, 233) for a first and second substances that once mixed together generate a fast hardening foam, whose outlets are connected to a mixing chamber (234) from which at least a nozzle (235) comes out into said enclosed compartment (2), each tank being provided with a duct for supplying a pressurized gas coming from a pressurized gas container (231) which is closed by means whose opening is regulated by said trigger signal and which pressurized inert gas causes both the substances to be discharged in a controlled manner which are mixed into said mixing chamber (234) supplying said at least one nozzle (235).

14. Burglarproof system for enclosed compartments, according to one or more of the preceding claims, **characterized in that** said enclosed compartment (2) is provided on a van carrying valuables (1) or it is a part of the body of said van carrying valuables (1).

15. Burglarproof system for enclosed compartments, according to one or more of the preceding claims, **characterized in that** said sensors (21) can be provided both in the front portion intended to house the driver and at least a further passenger and into the rear portion of said van carrying valuables.
